# FASCICULE DE BREVET EUROPEEN

(11) **EP 2 898 211 B1**
(45) Date de publication et mention de la délivrance du brevet: **10.04.2019**
(21) Numéro de dépôt: 13779251.1
(22) Date de dépôt: 17.09.2013
(51) Int. Cl.: F02K 1/72

(54) **STRUCTURE FIXE DE DISPOSITIF D'INVERSION DE POUSSÉE**
SCHUBUMKEHRVORRICHTUNG MIT FIXER STRUKTUR
THRUST REVERSER DEVICE FIXED STRUCTURE

(30) Priorité: 19.09.2012 FR 1258769
(43) Date de publication de la demande: 29.07.2015
(73) Titulaire: Safran Nacelles, 76700 Gonfreville-l'Orcher (FR)
(72) Inventeur: BUNEL, Serge, F-76610 Le Havre (FR); BELLANGER, Alexandre, F-76600 Le Havre (FR)
(74) Mandataire: Gaillarde, Frédéric F. Ch.
(86) Numéro de dépôt international: PCT/FR2013/052135
(87) Numéro de publication internationale: WO 2014/044964

(56) Documents cités:
- WO-A1-2011/073551
- US-A1- 2011 120 078
- US-B1- 7 484 356

## Description

La présente invention se rapporte à un inverseur de poussée, dit à grilles ou à cascades, pour un moteur à réaction.

Comme cela est connu en soi, un moteur d'aéronef, qui est en général du type turboréacteur, est placé à l'intérieur d'une nacelle qui, entre autres fonctions :
- assure le carénage aérodynamique du moteur,
- permet de canaliser l'air extérieur vers le moteur,
- permet de relier le moteur à l'aéronef.

En effet, la nacelle présente, généralement, une structure tubulaire comprenant une entrée d'air en amont du turboréacteur, une section médiane destinée à entourer une soufflante du turboréacteur, une section aval destinée à entourer la chambre de combustion du turboréacteur et abritant, le cas échéant, des moyens d'inversion de poussée.

Les nacelles modernes sont destinées à abriter un turboréacteur double flux apte à générer par l'intermédiaire des aubes de la soufflante en rotation un flux d'air chaud (également appelé flux primaire) issu de la chambre de combustion du turboréacteur, et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

La section aval d'une nacelle pour un tel turboréacteur présente, généralement, une structure externe fixe, dite Outer Fixed Structure (OFS) et une structure interne fixe concentrique, dite Inner Fixed Structure (IFS), entourant une section aval du turboréacteur abritant le générateur de gaz du turboréacteur.

Les structures interne et externe fixes définissent la veine destinée à canaliser le flux d'air froid qui circule à l'extérieur du turboréacteur.

Les documents US 7484356 B1 et US 2011/120078 A1 montrent des dispositifs d'inversion de poussée selon l'art antérieur.

Dans un cas particulier d'un dispositif d'inversion de poussée à grilles, les moyens mis en oeuvre pour réaliser la réorientation du flux d'air froid comprennent des grilles de déviation de flux d'air froid et un capot.

Ce capot mobile est déplaçable entre, d'une part, une position déployée dans laquelle il ouvre dans la nacelle un passage destiné au flux d'air froid dévié, et d'autre part, une position d'escamotage dans laquelle il ferme ce passage, le capot n'ayant qu'une simple fonction de coulissage visant à découvrir ou recouvrir ces grilles.

Plus précisément, le dispositif d'inversion de poussée comprend deux demi-capots hémicylindriques, montés de manière à pouvoir, notamment lors d'opérations de maintenance, être ouverts « en papillon » par pivotement autour d'une ligne charnière longitudinale, voisine d'un pylône de suspension de nacelle par lequel la nacelle est reliée à l'aile ou au fuselage de l'aéronef.

Une telle structure est appelée C-duct.

Chacun des deux demi-capots est monté coulissant sur une demi-poutre montée pivotante sur le pylône, le mouvement de rotation de chaque demi-poutre sur le pylône assurant le pivotement de chaque demi-capot par rapport à ce pylône pour les opérations de maintenance.

Le mouvement de coulissement de chaque demi-capot sur sa demi-poutre associée permet de faire passer l'inverseur de poussée de la configuration de jet direct à la configuration de jet inversé, et inversement.

Chaque demi-poutre comprend, typiquement, sur sa face extérieure, des rails primaire et secondaire aptes à permettre le mouvement du demi-capot associé, et une pluralité de chapes de charnières aptes à permettre l'articulation de la demi-poutre 1 sur le sur le pylône associé.

L'ensemble formé par la demi-poutre, ses rails et ses chapes de charnières, est souvent désigné par structure 12 heures, étant donnée sa position en haut du cercle défini par une section de nacelle, et par analogie avec le cadran d'une horloge.

Par ailleurs, pour assurer la continuité aérodynamique des lignes de la nacelle et en raison d'une interférence avec l'aile de l'aéronef lors de des phases de jet inversé, un panneau de carénage aérodynamique peut être monté de part et d'autre du pylône de suspension, en surmontant en partie supérieure les demi-capots.

Chacun de ces panneaux est lié à la poutre du côté de l'interférence avec l'aile, ou lié au capot du côté opposé à l'interférence.

Du fait de la présence du panneau de carénage aérodynamique amovible entre le capot et la poutre, le système de guidage rail-glissière de la poutre et du capot présente un porte à faux important par rapport à la poutre.

Cette configuration n'est pas viable.

En effet, lors du déploiement du capot mobile pendant la phase d'inversion de poussée, les risques de coincement du rail dans la glissière sont présents.

Le porte à faux, d'environ 500 mm, nécessite, dès lors, pour éviter tout risque de coincement du rail dans la glissière de multiplier la largeur du rail concerné.

Or, l'élargissement du rail entraîne l'allongement de la glissière correspondante sur la poutre, ce qui a pour conséquence une modification des lignes aérodynamiques externes de la nacelle.

Cet impact sur les lignes aérodynamiques est une conséquence inacceptable dans la mesure où cela entraîne une augmentation de la trainée et donc une diminution des performances aérodynamiques de l'inverseur en jet direct et un rapprochement de l'inverseur de poussée vers l'aile de l'aéronef.

Le constructeur est, alors, dans l'impossibilité de tenir les jeux avec l'aile demandés par l'avionneur.

De plus, une telle structure de guidage en coulissement des demi-capots en porte à faux de grande longueur offre une grande souplesse à la nacelle, ce qui la rend plus sensible aux déformations.

Il est, dès lors, nécessaire de maîtriser la tenue aux efforts de l'ensemble, en particulier à la fatigue, en imposant des réalisations en matériaux composites.

Cependant, de tels matériaux composites impliquent des développements de conception complexes et coûteux.

La présente invention vise à pallier les inconvénients ci-dessus mentionnés.

De ce fait, il existe un besoin pour une solution alternative aux structures 12 heures connues destinées à supporter les demi-capots du dispositifs d'inversion de poussée
Un but de l'invention est de proposer un dispositif d'inversion de poussée dans lequel on réduit le porte à faux lié au montage d'un demi capot sur la structure 12 heures correspondante.

Il est également désirable de proposer un dispositif d'inversion de poussée dans lequel on puisse maintenir des lignes aérodynamiques limitées, ceci afin de réduire la trainée aérodynamique.

Un autre but de l'invention est de proposer un dispositif d'inversion de poussée permettant un montage aisé, rapide et simple à mettre en oeuvre de chaque demi capot d'inversion de poussée.

Il est également désirable de proposer un dispositif d'inversion de poussée qui limite les risques de coincement du capot d'inversion de poussée lors de ces déplacements.

Un autre but de l'invention est de proposer un dispositif d'inversion de poussée permettant de s'affranchir de l'obligation de réalisation de structure 12 heures en matériaux composites.

Il est également désirable de réduire les efforts qui transitent dans les ensemble de guidage de chaque demi-capot d'inversion de poussée lors de leurs déplacements vers leurs différentes positions de jet direct et inversé tout en conservant une optimisation de la masse du dispositif d'inversion de poussée.

L'invention atteint son but par un dispositif d'inversion de poussée pour nacelle de turboréacteur comprenant, au moins :
- une structure fixe de support pour inverseur de poussée, comprenant une demi-poutre de support longitudinale apte à supporter un demi-capot d'inversion de poussée,
- le demi-capot d'inversion de poussée monté coulissant sur la structure fixe selon une direction sensiblement parallèle à un axe longitudinal du dispositif, par un ensemble de guidage, entre au moins une position de jet direct et une position d'inversion de poussée,
le dispositif d'inversion de poussée étant remarquable en ce que la structure fixe comprend, en outre, des moyens adaptés pour décaler corconférentiellement , dans un plan radial à l'axe longitudinal, l'ensemble de guidage du capot entre ses différentes positions par rapport à la demi-poutre sur laquelle est monté le demi-capot.

Grâce à la présente invention, ce décalage permet d'éviter toute interférence entre un panneau de carénage aérodynamique monté d'un côté de la structure fixe et les moyens de guidage du capot, réduisant, dès lors, le porte à faux des moyens de guidage du demi-capot relativement à la demi-poutre correspondante.

Suivant d'autres caractéristiques optionnelles de l'inverseur de poussée selon l'invention, prises seules ou en combinaison :
- Lesdits moyens de décalage comprennent un cadre support intermédiaire monté entre la demi-poutre et le demi-capot, configuré pour décaler angulairement relativement à la demi-poutre, dans un plan radial à l'axe longitudinal, l'ensemble de guidage du capot ;
- le cadre support intermédiaire forme un cadre qui s'étend d'une part sur la longueur de la demi-poutre correspondante et, d'autre part, sur un secteur angulaire d'un cadre avant de nacelle;
- le cadre support intermédiaire est formé d'au moins :
   - deux profilés latéraux opposés s'étendant sur sa longueur, à savoir un premier et un second profilé latéral,
   - deux profilés transversaux opposés s'étendant sur sa largeur, à savoir un profilé transversal amont et un profilé transversal aval,
   - des moyens de fixation ménagés sur le premier profilé latéral conçus pour la fixation du cadre support intermédiaire sur la demi-poutre et
   - les moyens de guidage du demi-capot ménagés sur le second profilé latéral;
- les moyens de fixation comprennent une bride de raccordement périphérique qui s'inscrit dans un plan perpendiculaire aux profilés transversaux amont et aval;
- le second profilé latéral comprend au moins une glissière de guidage longitudinale apte à coopérer avec un rail de guidage monté sur ledit demi-capot ou inversement pour assurer le coulissement du demi-capot correspondant entre une position de jet direct et une position d'inversion de poussée ou inversement ;
- le rail de guidage est associé à une tige de retenue supportant un patin monté sur une demi-virole externe du demi-capot et le relie à la glissière correspondante, cette tige pouvant être droite ou coudée ;
- le dispositif comprend, en outre, des moyens d'anti-coincement de rails dans les glissières correspondantes ;
- le cadre support intermédiaire est conformé de sorte que les moyens de guidage sont ménagés autour dudit axe longitudinal à une distance angulaire de la demi-poutre supérieure ou égale à la distance angulaire entre l'extrémité libre longitudinale d'un panneau de carénage aérdynamqiue monté sur la demi-poutre et la demi-poutre;
- le cadre support intermédiaire comprend, en outre, des moyens de liaison amont ménagés sur le bord transversal amont conçus pour la liaison du cadre support intermédiaire sur le cadre avant de nacelle, ces moyens de liaison amont étant conçus pour une liaison par recouvrement du cadre support intermédiaire et du cadre avant, et comprennent un ou plusieurs orifices traversant adaptés pour recevoir des moyens de fixation destinés à solidariser le cadre support intermédiaire et le cadre avant;
- le dispositif d'inversion de poussée comprend, en outre, des moyens autorisant toute rotation d'un cadre arrière relativement au cadre de support intermédiaire sur lequel il est monté
- le cadre support intermédiaire comprend des moyens de liaison aval ménagés sur le bord transversal aval conçus pour assurer une liaison de type rotule entre le cadre arrière et le cadre support intermédiaire;
- le cadre support intermédiaire comprend un ou plusieurs évidements adaptés pour recevoir et servir de surface d'appui à une ou plusieurs grilles de déviation de flux entre les différents profilés;
- le cadre support intermédiaire comprend, en outre, une ou plusieurs nervures de renforts de reprise d'effort transversaux formées sur un ou plusieurs des profilés transversaux;
- les moyens adaptés pour décaler circonférentiellement, dans un plan radial à l'axe longitudinal, l'ensemble de guidage du demi-capot comprennent :
- des moyens de liaison aval complémentaires ménagés sur l'ensemble de guidage et le cadre arrière conçus pour assurer une liaison entre le cadre arrière et l'ensemble de guidage du capot décalée circonférentiellement, dans un plan radial à l'axe longitudinal, par rapport à la demi-poutre sur laquelle est monté le demi-capot ;
- des moyens de liaison amont complémentaires ménagés sur l'ensemble de guidage et le cadre avant conçus pour assurer une liaison entre l'ensemble de guidage et le cadre avant décalée circonférentiellement, dans un plan radial à l'axe longitudinal, par rapport à la demi-poutre sur laquelle est monté le demi-capot;
- les moyens de liaison amont comprennent des moyens autorisant toute rotation de l'ensemble de guidage relativement au cadre avant sur lequel il est monté ;
- les moyens de liaison amont sont conçus pour assurer une liaison de type rotule entre le cadre avant et l'extrémité amont de l'ensemble de guidage ;
- les moyens de liaison amont comprennent des moyens interdisant toute rotation selon l'axe longitudinal de l'ensemble de guidage relativement au cadre avant sur lequel il est monté ;
- les moyens de liaison amont comprennent une première liaison rotulée entre l'ensemble de guidage et le cadre avant associé à un élement interdisant la rotation selon l'axe longitudinal de l'ensemble de guidage ;
- ledit élément interdisant la rotation comprend un doigt de blocage s'étendant selon l'axe longitudinal et adapté pour coopérer avec un orifice traversant ménagé sur le cadre avant.

L'invention concerne, en outre une nacelle comprenant un dispositif d'inversion de poussée tel que précité.

D'autres caractéristiques et avantages de la présente invention apparaîtront à la lumière de la description qui va suivre, et à l'examen des figures ci-annexées, dans lesquelles :
- la figure 1 est une vue en perspective d'une nacelle de turboréacteur présentant un inverseur de poussée comportant un capot mobile de type « C-duct » en position d'ouverture intermédiaire;
- la figure 2 est une vue partielle en perspective d'un inverseur de poussée selon un premier mode de réalisation de la présente invention ;
- la figure 3 est une vue de dessus de la nacelle de la figure 1 incorporant l'inverseur de poussée de la figure 2 dans laquelle le capot d'inversion de poussée a été oté ;
- la figure 4 est une vue en perspective éclatée d'un ensemble de guidage de l'inverseur de la figure 2 associé à un cadre de support intermédiaire d'une structure fixe de la nacelle selon le premier mode de réalisation de la présente invention ;
- la figure 5 est une vue en perspective éclatée, partielle, de la zone B de l'inverseur de poussée de la figure 2 ;
- la figure 6 est une vue de dessus de la nacelle de la figure 1 dans laquelle le capot d'inversion de poussée est en position de jet inversé vers l'aval de la nacelle ;
- la figure 7 est une vue partielle en perspective d'un inverseur de poussée selon un second mode de réalisation de la présente invention ;
- la figure 8 est une vue en coupe de l'inverseur de poussée de la figure 7, le panneau de carénage aérodynamique ayant été oté ;
- la figure 9 est une vue partielle en perspective d'une variante de réalisation de l'inverseur de poussée selon un second mode de réalisation de la présente invention de la figure 7, le panneau de carénage aérodynamique ayant été oté ;
- la figure 10 est une vue similaire à celle de la figure 9 d'une autre variante de réalisation de l'inverseur de poussée selon un second mode de réalisation de la présente invention de la figure 7, observé de l'aval de la nacelle ;
- la figure 11 est une vue en coupe dans un plan YZ d'une attache ammont d'un ensemble de guidage d'un capot d'inverseur de poussée selon la variante de réalisation de la figure 9, sur un cadre avant d'une structure fixe de la nacelle de la figure 1 ;
- la figure 12 est une vue en perspective d'une partie de l'ensemble de guidage de la figure 11 selon la variante de réalisation d'inverseur de poussée de la figure 9 ;
- la figure 13 est une vue partielle en perspective d'une variante de réalisation de l'inverseur de poussée selon un second mode de réalisation de la présente invention de la figure 7, observé de l'aval de la nacelle ;
- la figure 14 est une vue de l'inverseur de poussée de la figure 13 observé en amont du cadre avant de la structure fixe de la nacelle ;
- la figure 15 est une vue en perspective d'une partie d'un ensemble de guidage selon la variante de réalisation d'inverseur de poussée des figures 13 et 14 .

Sur l'ensemble de ces figures, des références identiques ou analogues désignent des organes ou ensembles d'organes identiques ou analogues.

On notera que l'on a pris soin de définir dans la description un repère à trois axes X, Y Z, ces trois axes étant représentatifs :
- de la direction longitudinale du turboréacteur pour l'axe X,
- de la direction menant de l'axe longitudinal du turboréacteur à l'axe longitudinal du pylône pour la direction Z et,
- de la direction orthogonale à X et Z pour l'axe Y.

Dans le cas d'un ensemble propulsif monté sous aile, l'axe Z est généralement vertical.

Dans la description ci-après, l'axe vertical sera assimilé à l'axe Z, même si l'ensemble propulsif est monté dans une autre configuration, tel que par exemple en fuselage arrière, ceci à des fins de simplification.

On notera également que les termes amont et aval s'entendent par rapport à la direction d'avancement de l'aéronef rencontré suite à une poussée exercée par le turboréacteur.

On entend par supérieure (inférieure), la position à proximité l'opposé (respectivement à l'opposé) du pylône de suspension lorsque la nacelle est montée sous une aile d'un aéronef. On qualifie usuellement la position inférieure (supérieure) de position 6 heures (respectivement 12 heures) par analogie avec le positionnement des aiguilles sur le cadran d'une horloge.

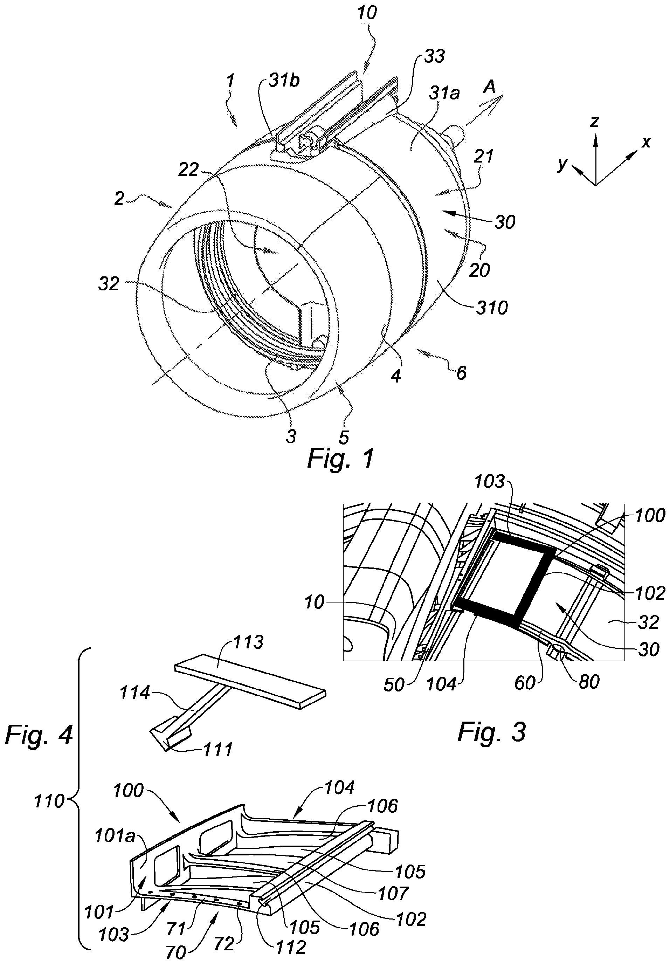

En référence aux figures 1 à 3, un ensemble propulsif d'aéronef 1 comprend une nacelle 2 entourant un turboréacteur (non illustré) qui présentent tous les deux un axe longitudinal central A correspondant à l'axe X

Cette nacelle 2 est destinée à être rattachée sous une aile d'un aéronef (non visible) par l'intermédiaire d'un pylône de suspension 10 orienté vers l'amont de l'aéronef.

Comme cela est connu en soi, le turboréacteur comprend une soufflante 3 délivrant un flux d'air annulaire avec un flux primaire qui alimente le moteur entraînant la soufflante 3 et un flux secondaire qui est éjecté dans l'atmosphère tout en fournissant une fraction importante de la poussée de l'aéronef.

Pour rappel, la nacelle 2 comprend typiquement une structure externe comprenant une structure amont d'entrée d'air 5, une structure médiane 6 entourant des aubes de la soufflante 3 du turboréacteur, et une structure aval 20 pouvant abriter un dispositif d'inversion de poussée 30.

La structure aval 20 comprend une structure externe 21 dite OFS abritant le dispositif d'inversion de poussée 30, cette structure externe 21 définissant avec une structure interne 22 comportant un carénage du moteur en aval des aubes de la soufflante, dite IFS, concentrique, une veine d'air annulaire au travers duquel le flux d'air secondaire est destiné à circuler, par opposition au flux primaire chaud engendré.

Les moyens d'inversion de poussée 30 comprennent un capot 31 monté mobile en translation longitudinale selon une direction sensiblement parallèle à l'axe longitudinal A de la nacelle 2 associé à des grilles 32 de déviation de flux d'air présentant, chacune, une pluralité d'aubes déflectrices de flux et des volets (non visibles sur ces figures) adaptés pour obturer la veine annulaire lors d'une inversion de poussée.

Ce capot d'inversion de poussée 31 est apte à passer alternativement d'une position de fermeture dans laquelle il assure la continuité aérodynamique des lignes externes de la nacelle 2 avec la section médiane 6 et recouvre les grilles 32 de déviation de flux d'air, à une position d'ouverture dans laquelle il ouvre un passage dans la nacelle 2 en découvrant les grilles de déviation 32.

Les grilles de déviation 32 sont aptes à réorienter une partie du flux d'air secondaire généré par le turboréacteur vers l'avant de la nacelle 2 à travers l'ouverture ainsi dégagée.

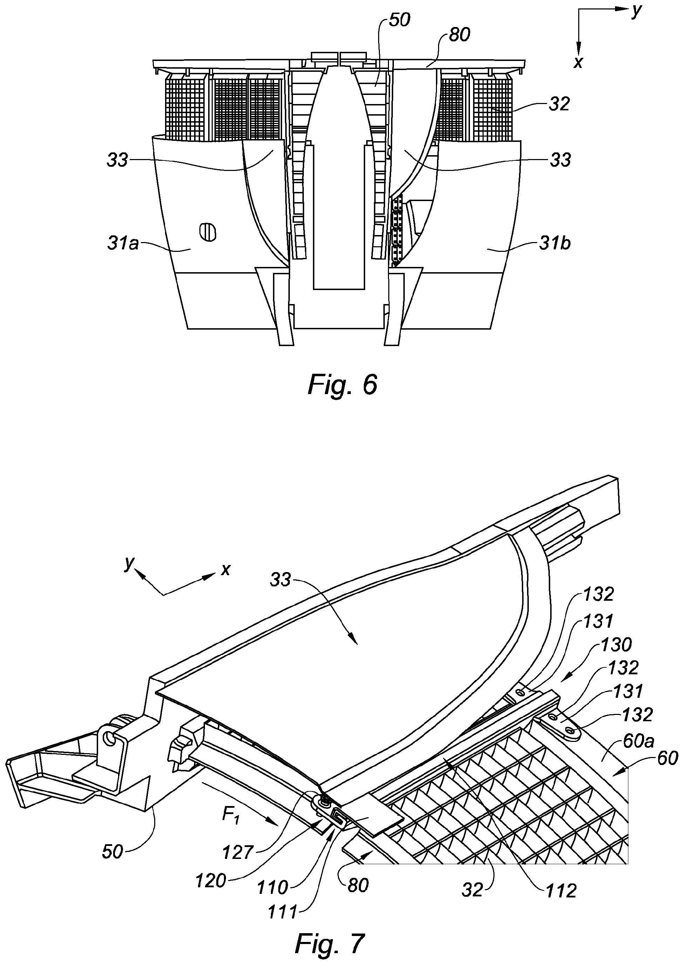

La position représentée à la figure 1 est une position intermédiaire du capot 31 entre sa position de fermeture et d'ouverture tandis que la position représentée à la figure 6 est une position d'ouverture complète du capot 31 découvrant les grilles de déviation 32 de flux d'air.

Le capot 31 comporte deux demi-capots 31a,31b hemicylindriques, amovibles, présentant, respectivement, des bords supérieurs 33 destinés à être montés indirectement sur le pylône de suspension 10.

Chacun de ces demi-capots 31a,31b comprend une demi-virole externe 310 et une demi-virole interne (non illustrée) destinée à délimiter, dans une position de jet direct du turboréacteur, une paroi externe de la veine.

Plus précisément, chacun des deux demi-capots 31a,31b est monté coulissant sur une demi-poutre 50 support longitudinale, dite poutre 12h entre sa position « jet direct » et sa position d'inversion de poussée dans laquelle il dégage les grilles d'inversion 32, permettant l'orientation d'une partie du flux d'air circulant dans la veine vers l'avant de la nacelle.

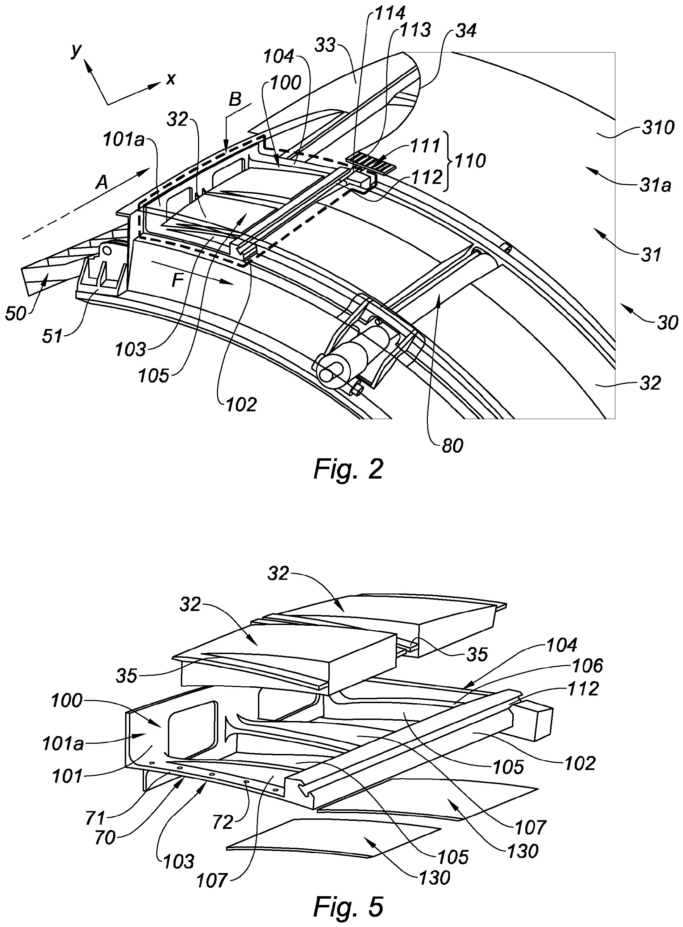

Cette demi-poutre 50 support longitudinale est visible uniquement sur les figures 2 , 3, 6 et 8.

Cette demi poutre 50, qui fait partie de la structure fixe de l'inverseur de poussée, a, notamment, vocation à recevoir l'ensemble de guidage 110 permettant de réaliser le coulissement de l'inverseur de poussée 30 entre ses positions jet direct et jet inversé le long de l'axe longitudinal A.

On entend, dans le cadre de la présente invention, par le terme « ensemble de guidage » tout moyen permettent de guider le coulissement du capot entre ces différents positions, à savoir tout moyen permettant d'imposer une trajectoire au capot: ces moyens sont distincts de moyens d'actionnement de type vérins qui eux ont pour fonction d'actionner le coulissement et non de le guider.

Ainsi, l'ensemble de guidage peut comprendre tout moyen de guidage connu et notamment mais non exclusivement de type coulisseaux sur rail, rails-glissières, système de patins à rouleaux aptes à coopérer avec un rail correspondant.

Par la suite, la description est faite au regard d'un mode particulier d'éxecution non limitatif comprenant un ensemble de guidage rail -glissière.

Par ailleurs, la demi-poutre 50 support longitudinale est associée, également, à une pluralité de chapes de charnières (non illustrées) aptes à permettre l'articulation de la demi-poutre 50 sur le pylone 10, pour les opérations de maintenance.

Par ailleurs, chaque demi-poutre 50 comprend une ou plusieurs entretoises 51 montées sur la partie amont (par rapport au sens de l'écoulement d'air dans la nacelle) de la demi-poutre 50, permettant la fixation d'un cadre avant 80 (illustré sur la figure 6) destiné à supporter les grilles 32 de l'inverseur de poussée 30.

Le cadre avant 80 circulaire se compose en fait de deux demi-cadres avant permettant de fixer cet inverseur sur le carter de soufflante de la section médiane de la nacelle, les extrémités de chacun de ces demi-cadres étant reliées respectivement à la demi- poutre supérieure 50 et à une demi-poutre inférieure (non illustrée), à 6 heures.

Les grilles de déviation 32 sont fixées entre le cadre avant périphérique et un cadre arrière 60 (illustré sur la figure 3) périphérique, en aval, qui généralement rejoint entre eux la demi-virole externe 310 et la demi-virole interne du capot 31a, 31b.

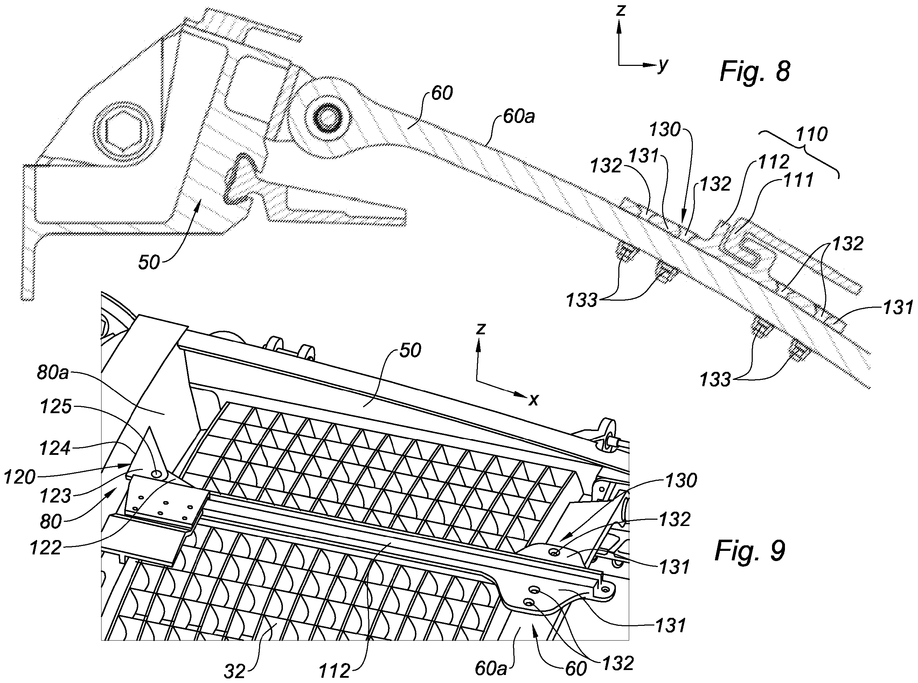

Comme illustré sur la figure 8, ce cadre arrière 60 se compose en fait de deux demi-cadres arrière, chacun étant monté pivotant autour de l'axe X sur la demi-poutre 50 support longitudinale correspondante.

Par ailleurs, en référence aux figures 1, 2, 6 et 7, pour assurer la continuité aérodynamique des lignes de la nacelle 2, un panneau de carénage aérodynamique 33, peut être monté de part et d'autre du pylône de suspension 10 (non représenté sur les figures 6 et 7), en surmontant en partie supérieure les demi-capots 31a, 31b.

Chacun de ces panneaux 33 est monté articuler ou non sur la demi-poutre 50 le long d'un axe parallèle à l'axe longitudinal X.

Chacun de ces panneaux 33 peut être monté, fixe ou mobile, relativement au pylône 10 de suspension.

La description qui suit est faite au regard des figures 1 à 15 et à celui d'un demi-capot 31a, 31b uniquement, étant entendu qu'elle est applicable de part et d'autre du pylône 10 de suspension pour chacun des demi-capots 31a,31b.

Dans un premier mode de réalisation illustré plus particulièrement sur les figures 2 à 5, pour assurer ces déplacements particuliers du demi-capot 31a et permettre l'accrochage de ce dernier, la structure fixe de l'inverseur de poussée 30 comprend un cadre 100 support intermédiaire intercalé entre la demi-poutre 50 et le demi-capot 31a.

Ce cadre 100 support intermédiaire est configuré pour décaler angulairement relativement à la demi-poutre 50, dans un plan radial à l'axe longitudinal X, l'ensemble de guidage 110 du demi-capot 31a.

Cet ensemble de guidage 110 en translation du demi-capot 31a est constitué d'un ensemble rail 111-glissière 112 s'étendant le long de l'axe longitudinal A de la nacelle 2, de part et d'autre du pylône de suspension 10.

Les ensembles rails-glissières 110 sont des moyens de montage simples à mettre en oeuvre.

Le cadre 100 support intermédiaire est un quadrilatère qui s'étend d'une part sur la longueur de la demi-poutre 50 correspondante et, d'autre part, sur un secteur angulaire du cadre avant 80, autour de l'axe X de la nacelle.

Il comprend une partie amont destinée à être fixée au cadre avant 80 et une partie aval destinée à être solidarisée au cadre arrière 60 supportant les grilles 32.

Ce cadre 100 support intermédiaire est, ainsi, formé d'au moins :
- deux profilés latéraux opposés s'étendant sur sa longueur, à savoir un premier 101 et un second profilé 102 latéral s'étendant sensiblement le long de l'axe X et de la demi-poutre 50,
- des moyens de liaison ménagés sur le premier profilé 101 latéral conçus pour la fixation du cadre 100 support intermédiaire sur la demi-poutre 50 correspondante,
- deux profilés transversaux 103,104 opposés s'étendant sur sa largeur, à savoir un profilé transversal amont 103 et un profilé transversal aval 104, situées respectivement dans les parties amont et aval du cadre 100 support, perpendiculaires aux profilés latéraux 101,102.

Les profilés transversaux 103,104 opposés sont reliés, chacun, à l'une de leur extrémité, au premier profilé latéral 101 et, à leur extrémité opposée, au second profilé latéral 102.

Ces différents liaisons forment l'ossature du cadre 100 support intermédiaire qui, par ailleurs, comprend, entre ces différents profilés, des évidements 105 pour optimiser la masse de la structure.

Par longueur du cadre 100 support intermédiaire, on entend sa dimension longitudinale prise dans une direction parallèle à l'axe X de la nacelle en situation sur l'inverseur de poussée 30 et s'étendant entre les deux profilés transversaux 103,104.

Par largeur du cadre 100 support intermédiaire, on entend sa dimension prise dans une direction Y sensiblement perpendiculaire à l'axe X de la nacelle en situation sur l'inverseur de poussée et s'étendant entre les deux profilés latéraux 101,102.

Conformément à la présente invention, l'ensemble de guidage 110 du demi capot 31a est, en partie, ménagé sur le second profilé 102 latéral, le plus éloigné de la demi-poutre 50 correspondante.

Ainsi, l'ensemble de guidage 110 rail 11 1-glissière 112 et le coulissement du demi-capot 31a est déporté relativement à la demi-poutre 50 dans la direction de la flèche F sur la figure 2, de la largeur du cadre 100 support intermédiaire.

Le décalage angulaire ou circonférentiel de l'ensemble de guidage 110 rail-glissière est déterminé de manière à ménager l'ensemble de guidage 110 rail-glissière du demi-capot 31a à une distance angulaire de la demi-poutre 50 supérieure ou égale à la distance angulaire à laquelle se trouve l'extrémité libre latérale du panneau 33 de carénage aérodynamique monté sur la demi-poutre 50 correspondante.

En assurant la liaison entre la demi-poutre 50 et l'ensemble de guidage 110, le cadre 100 support intermédiaire permet de dégager la zone localisée sous le panneau de carénage 33 de sorte que l'ensemble de guidage 110 du demi-capot 31a sur la demi-poutre 50 correspondante n'interfère plus, comme c'était le cas dans l'art antérieur, avec le panneau de carénage 33.

On réduit, ainsi, le porte à faux des moyens de guidage 110 du demi-capot 31a relativement à la demi-poutre 50 correspondante.

Ce panneau de carénage 33 n'est plus un obstacle au bon fonctionnement du coulissement du capot 31 d'inversion de poussée entre ses positions de jet direct et de jet inversé.

Concernant plus particulièrement les moyens de guidage 110, ils comprennent au moins la glissière 112 de guidage longitudinale ménagée sur le second profilé 102 latéral du cadre 100 support intermédiaire apte à coopérer avec le rail 111 de guidage monté sur ledit demi-capot 31a ou inversement, pour assurer le coulissement du demi capot 31a correspondant entre une position de jet direct et une position d'inversion de poussée ou inversement.

Chaque rail 111 est adapté pour permettre le coulissement du demi-capot 31a dans la glissière 112 longitudinale s'étendant selon l'axe longitudinal A de la nacelle 2, ménagée sur le cadre support intermédiaire en regard du bord supérieur 32 du demi-capot 31.

Dans le mode de réalisation présenté, chaque rail 112 est monté sur un patin 113 plan reliant le rail 111 à la demi-virole externe 310 du demi-capot 31a.

La glissière 112 se présente sour la forme d'une gorge longitudinale s'étendant le long de l'axe A, cylindrique, partiellement ouverte longitudinalement sur sa circonférence.

Cette ouverture longitudinale est destinée au passage d'une tige de retenue 114 supportant le rail 111 associé le reliant, par l'intermédiaire du patin 113, à la demi-virole externe 310 du demi-capot 31a.

Par ailleurs, dans un mode de réalisation préféré de la présente invention, le dispositif comprend, en outre, des moyens d'anti-coincement du rail 111 dans la glissière 112 correspondante : ainsi, on peut prévoir que ces tiges de retenue 1114 soient coudées, ceci afin de pouvoir s'adapter aux diverses configurations aérodynamiques rencontrées sur les nacelles et aussi d'avoir une orientation des diverses réactions d'efforts moins susceptibles de générer des coincements.

On limite, ainsi, le phénomène d'arc-boutement entre les rails 111 du capot 31 et les glissières correspondantes 112 en partie supérieure du capot 31, susceptible de bloquer le mouvement des rails 111.

D'autres variantes de réalisation des moyens d'anti-coincement peuvent être envisagées

Dans une autre variante de réalisation, non exclusive de la précédente, on peut prévoir de ménager la ou les glissières 112 sur le demi-capot 31a et le rail 111 sur le cadre 100 support intermédiaire.

Concernant le montage du cadre 100 support intermédiaire dans son environnement sur l'inverseur de poussée 30, les moyens de fixation du cadre 100 support intermédiaire sur la demi-poutre 50 correspondante comprennent une bride 101a de raccordement périphérique qui s'inscrit dans un plan perpendiculaire aux profilés transversaux 103,104.

Cett bride 101a forme le premier profilé latéral 101 du cadre support intermédiaire et est adaptée pour reposer et former une liaison appui plan avec un élement correspondant de la demi-poutre 50 pour ensuite y être fixée.

Dans une variante de réalisation non limitative de la présente invention, la fixation de la bride 101a sur l'élement correspondant de la demi-poutre 50 est assurée par des moyens de vissage.

Le cadre 100 support intermédiaire comprend, en outre, des moyens de liaison 70 amont ménagés sur le profilé transversal amont 103 et conçus pour la liaison du cadre 100 support intermédiaire sur le cadre avant de nacelle.

Ces moyens de liaison 70 amont sont conçus pour assurer une liaison par recouvrement du cadre 100 support intermédiaire et du cadre avant.

Dans une variante de réalisation, ils peuvent comprendre une saillie 71 s'étendant à partir du profilé transversal amont vers le cadre avant, sur l'ensemble de la longueur du profilé 103 transversal amont, cette saillie 71 étant adaptée pour venir en recouvrement d'un élement complémentaire ménagé sur le cadre avant.

De plus, un ou plusieurs orifices 72 traversant adaptés pour recevoir des moyens de fixation destinés à solidariser le cadre 100 support intermédiaire et le cadre avant sont répartis sur cette saillie 71.

Par ailleurs, le dispositif d'inversion de poussée 30 comprend, en outre, des moyens autorisant toute rotation du cadre arrière 60 relativement au cadre de support intermédiaire sur lequel il est monté.

Le cadre 100 support intermédiaire comprend, ainsi, des moyens de liaison aval ménagés sur le profilé transversal aval 104 conçus pour assurer une liaison de type rotule entre le cadre arrière 60 et le cadre 100 support intermédiaire.

Comme illustré sur les figures 2 et 5 notamment, le cadre support intermédiaire 100 est adapté pour loger une ou plusieurs grilles 32 de déviation de flux entre les différents profilés 101,102,103,104 dans les évidements 105 formés.

Ainsi, les profilés transversaux 103,104 comprennent sur leur face interne dirigée vers l'intérieur du cadre 100 support et en regard, des épaulements 106 permettant de servir de surface d'appui à une ou plusieurs grilles 32 de déviation de flux et, plus particulièrement, à des pattes de fixation 35 en saillie des grilles 32 de déviation destinées à reposer sur les épaulements 106 correspondants pour y être fixées.

Dans la variante de réalisation dans laquelle le panneau 33 de carénage aérodynamique est fixe, le cadre 100 support intermédiaire comprend des éléments 130 d'oburation des évidements 105, comme illustré sur la figure 5.

Ainsi, le cadre 100 support intermédiaire peut s'adapter à plusieurs configurations de nacelle soit en permettant le montage de grilles de déviation 32 soit en présentant des éléments d'obturation 130 des évidements 105, rendant le cadre support intermédiaire plein.

On facilite, dès lors, la production de ce type de pièce et on réduit les coûts de fabrication associés.

Comme illustré sur les figures 2 à 4, le cadre 100 support intermédiaire comprend, en outre, une ou plusieurs nervures 107 de renforts de reprise d'effort transversales formées sur un ou plusieurs des profilés transversaux 103,104, ce qui permet de renforcer la tenue structurale du montage du demi-capot 31a.

Ces nervures 107 s'étendent en saillie des faces externes des profilés transversaux 103,104 correspondants, situées et dirigées vers la demi-virole externe 310 du demi-capot 31a lorsque le cadre 100 support intermédiaire est monté sur l'inverseur de poussée.

Par ailleurs, de façon connue, le coulissement du capot mobile entre ses positions jet direct et jet inverse est assuré par des moyens d'actionnement 80 de type vérins répartis à la périphérie de la nacelle et visibles sur les figures 2 et 3.

Classiquement, ces vérins sont fixés en amont sur le cadre avant, et en aval à l'intérieur du capot mobile, par l'intermédiaire de ferrures adaptées.

Plus précisément, les tiges d'actionnement de ces vérins traversent le cadre arrière 60 des grilles de déviation 32 pour coopérer avec le demi-capot 31a.

Par ailleurs, dans un autre mode de réalisation de la présente invention, une partie des grilles de déviation 32 du dispositif d'inversion de poussée 30 est interchangeable.

Ceci permet d'ajuster les configurations des grilles 32 en fonction de la position de la nacelle (aile droite ou aile gauche, les configurations des demis inverseurs gauche et demi inverseur droit n'étant pas ni identiques ni symétriques) et d'installer des grilles pleines (appelées blank off) lorsque le panneau de carénage aérodynamique 33 est fixé sur la poutre 50 afin d'éviter que le flux d'air arrache le panneau 33 lors de l'inversion de poussée.

Dans un second mode de réalisation illustré plus particulièrement sur les figures 7 à 15 dans plusieurs variantes de réalisation, pour assurer les déplacements particuliers du demi-capot 31a et permettre l'accrochage de ce dernier sur la nacelle, l'ensemble de guidage 110 du demi-capot 31a est monté directement, à une extrémité amont, sur le cadre avant 80 et, à une extrémité aval, sur le cadre arrière 60, par des moyens de liaison respectivement amont et aval.

Ces moyens de liaison respectivement amont et aval sont configurés pour décaler angulairement relativement à la demi-poutre 50, dans un plan radial à l'axe longitudinal X, l'ensemble de guidage 110 du demi-capot 31a.

Dans ce second mode de réalisation, on supprime donc le cadre support intermédiaire et on le remplace par une ou plusieurs attaches de suspension amont de l'ensemble de guidage 110 sur le cadre avant 80 et une ou plusieurs attaches de suspension aval de l'ensemble de guidage 110 sur le cadre arrière 60.

Comme dans le premier mode de réalisation, cet ensemble de guidage 110 en translation du demi-capot 31a est constitué, de façon non limitative, d'un ensemble rail 111-glissière 112 s'étendant le long de l'axe longitudinal X de la nacelle 2, de part et d'autre du pylône de suspension 10.

Comme illustré sur la figure 7 notamment et de façon similaire au premier mode de réalisation, le montage de l'ensemble de guidage 110 rail 111-glissière 112 sur le cadre avant 80 et le cadre arrière 60 et le coulissement du demi-capot 31a (non visible sur cette figure) sont déportés relativement à la demi-poutre 50 dans la direction de la flèche F1.

Le décalage angulaire ou circonférentiel de l'ensemble de guidage 110 rail-glissière est déterminé de manière à ménager l'ensemble de guidage 110 rail-glissière du demi-capot 31a à une distance angulaire de la demi-poutre 50 supérieure ou égale à la distance angulaire à laquelle se trouve l'extrémité libre latérale du panneau 33 de carénage aérodynamique monté sur la demi-poutre 50 correspondante.

On dégage, dès lors, la zone localisée sous le panneau de carénage 33 de sorte que l'ensemble de guidage 110 du demi-capot 31a sur la demi-poutre 50 correspondante n'interfère plus, comme c'était le cas dans l'art antérieur, avec le panneau de carénage 33.

On réduit, ainsi, le porte à faux des moyens de guidage 110 du demi-capot 31a relativement à la demi-poutre 50 correspondante.

Ce panneau de carénage 33 n'est plus un obstacle au bon fonctionnement du coulissement du capot 31 d'inversion de poussée entre ses positions de jet direct et de jet inversé.

Concernant le montage de l'ensemble de guidage 110 rail 111-glissière 112 sur le cadre avant 80, les moyens assurant le décalage angulaire de l'ensemble de guidage 110 relativement à la demi-poutre 50 correspondante comprennent des moyens de liaison amont 120 autorisant au moins une rotation de l'ensemble de guidage 110 relativement au cadre avant 80.

Dans une première variante de réalisation illustrée sur les figures 9,11 et 12, les moyens de liaison amont 120 autorise toute rotation de l'ensemble de guidage 110 relativement au cadre avant 80 sur lequel il est monté.

Plus particulièrement, les moyens de liaison amont 120 sont conçus pour assurer une liaison de type rotule entre le cadre avant 80 et l'extrémité amont de l'ensemble de guidage 110.

La description qui suit est faite au regard de la glissière 112 de l'ensemble de guidage 110 uniquement, étant entendu qu'elle s'applique également au rail 111 si c'est ce dernier qui doit etre fixé sur le cadre avant 80 et le cadre arrière 60 plutôt que sur le demi capot 31a,31b à déplacer.

Dans la première variante de réalisation, la glissière 112 est montée, à son extrémité amont, via un point d'ancrage décalé angulairement de la demi-poutre 50 correspondante sur le cadre avant 80.

L'extrémité amont de la glissière 112 est articulée sur le cadre avant 80 par un axe rotulé 121.

Plus précisément, l'extrémité amont de la glissière 112 est munie d'une chape d'accrochage 122 maie pour coopérer avec deux chapes 123 d'accrochage femelles ménagées sur un support d'accrochage 124 solidaire de la face externe 80a du cadre avant 80 s'étendant dans un plan yz en regard des grilles de déviation de flux 32.

Il est à noter que ce support d'accrochage 124 pourrait être ménagé sur la face interne opposée du cadre avant 80 dans une variante de réalisation pour optimiser l'encombrement du montage.

Le support d'accrochage 124 est monté sur la face externe 80a du cadre avant 80 par l'intermédiaire de moyens de fixation adaptés.

Il peut notamment être formé d'un seul tenant avec le cadre avant 80.

Ce support d'accrochage 124 comprend la paire de chapes d'accrochage 123 parallèles au plan XY, espacés selon Z et destinées à coopérer avec la chape 122 maie de l'extrémité amont de la glissière 112.

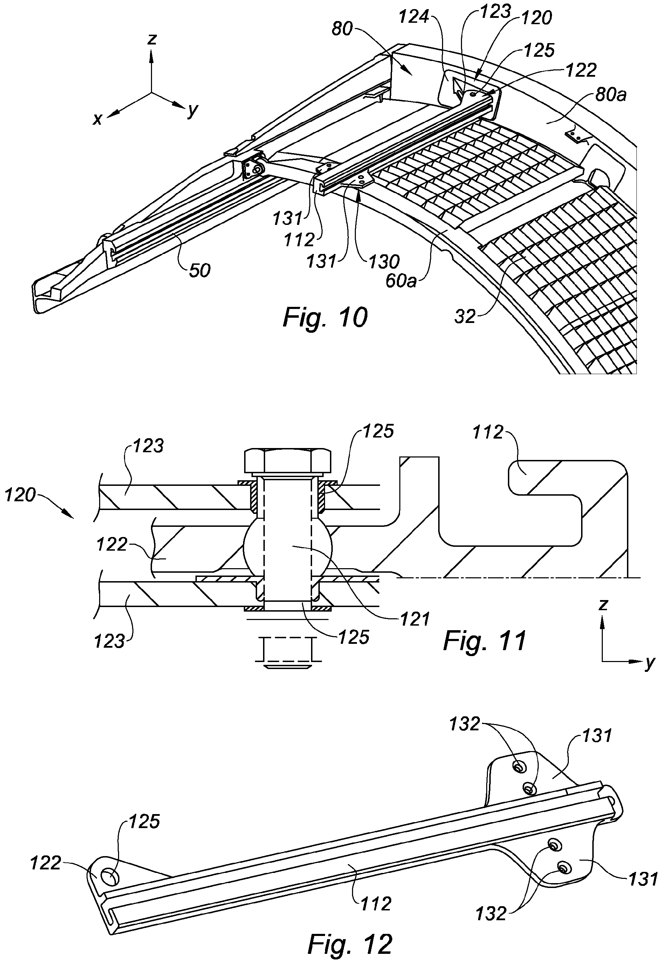

En variante illustrée sur la figure 10, le support d'accrochage 124 peut être muni d'une chape 123 pour coopérer avec deux chapes 122 ménagées sur la glissière 112 correspondante.

Chacune de ces chapes 123 est munie d'un oeillet 125 ménagé en regard d'oeillets 125 ménagés sur la chape 122 de la glissière 112 correspondante.

Ces différents oeillets 125 sont adaptés pour recevoir des moyens de liaison 121 destinés à relier les différentes chapes entre elles.

Ces moyens de liaison comprennent l'axe rotulé 121 précité s'étendant selon l'axe Z, comme illustré sur la figure 11.

Dans une seconde variante de réalisation illustrée sur les figures 7, et 13 à 15, les moyens de liaison amont 120 entre le cadre avant 80 et la glissière de guidage 112 autorise uniquement une rotation autour de Z de l'ensemble de guidage 110 relativement au cadre avant 80 sur lequel il est monté.

L'interdication d'une rotation selon l'axe X permet d'éviter tout désengagement de la glissière 112 avec le cadre avant 80.

Dans ce cadre, les moyens de liaison amont 120 comprennent une première liaison rotulée entre l'extrémité amont de la glissière 112 et la face externe 80a du cadre avant 80.

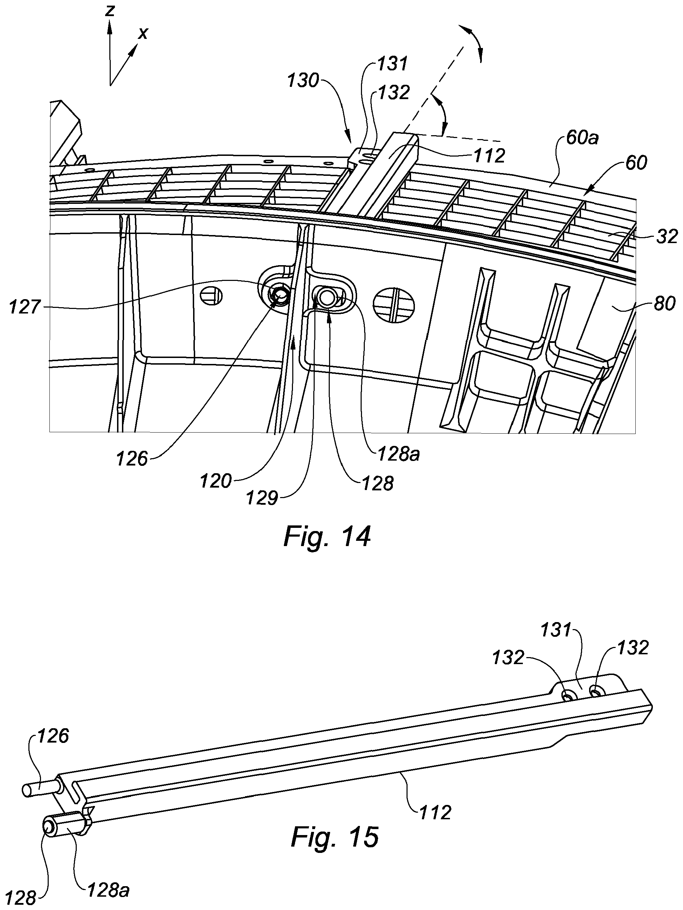

Cette liaison rotulée peut être réalisée par la coopération d'un axe 126 solidaire de l'extrémité amont de la glissière 112 adapté pour coopérer avec une rotule 127 (illsutrée sur les figures 7 et 14 notamment) sertie dans un orifice adapté ménagé sur la face externe 80a du cadre avant 80.

Cet axe 126 s'étend selon X.

Cette liaison rotulée est associée à une seconde liaison entre le cadre avant 80 et la glissière 112, cette seconde liaison comprenant un élement 128 interdisant la rotation selon X de la glissière 112.

Cet élement 128 comprend un doigt de blocage 128 s'étendant selon l'axe X et adapté pour coopérer avec un orifice 129 traversant de dimensions adaptés ménagé sur le cadre avant 80.

De plus, dans une variante de réalisation, le doigt de blocage 128 peut être recouvert sur sa circonférence d'un matériau 128a résistant au frottement.

Dans un exemple non limitatif, ce matériau peut être du TEFLON.

Quelle que soit la variante de réalisation des moyens de liaison amont 120 entre le cadre avant 80 et l'ensemble de guidage 110, ce second mode de réalisation permet de proposer un montage assoupli de l'ensemble de guidage 110 sur la structure fixe de la nacelle 2 en autorisant des degrés de liberté aux points d'attache de l'ensemble de guidage 110 sur le cadre avant 80.

Ceci offre l'avantage de réduire les efforts qui transitent dans l'ensemble de guidage 110 du demi capot d'inversion de poussée 31a,31b tout en optimisant la masse du dispositif d'inversion de poussée.

Concernant le montage de l'ensemble de guidage 110 rail 111-glissière 112 sur le cadre arrière 60, les moyens assurant le décalage angulaire de l'ensemble de guidage 110 relativement à la demi-poutre 50 correspondante comprennent des moyens de liaison aval 130 assurant une liaison rigide entre l'extrémité aval de la glissière 112 et le cadre arrière 60, décalée angulairement relativement à la demi poutre correspondante 50.

En référence aux figures 7 à 10 et 12, les moyens de liaison aval 130 assurent une liaison appui plan entre l'extrémité aval de la glissière 112 et une face supérieure 60a du cadre arrière 60 dirigée vers l'extérieure de la nacelle 2.

Dans ce cadre, l'extrémité aval de la glissière 112 comprend au moins une ailette 131 d'accrochage s'étendant généralement dans un plan xy destinée à reposer sur la face supérieure 60a du cadre arrière 60 pour ensuite y être fixée.

De plus, un ou plusieurs orifices 132 traversant adaptés pour recevoir des moyens de fixation 133 (illustrés sur la figure 8) destinés à solidariser le cadre arrière 60 et la glissière 112 sont répartis sur ces ailettes 131 et sur le cadre arrière 60.

Dans un mode de réalisation non limitatif de la présente invention, la fixation de l'extrémité aval de la glissière 112 sur le cadre arrière 60 est assurée par des liaisons axiales suivant Z.

On peut prévoir, notamment mais non exclusivement, des moyens de vissage 133 de type vis ou pions ou tout autre élement de fixation adapté.

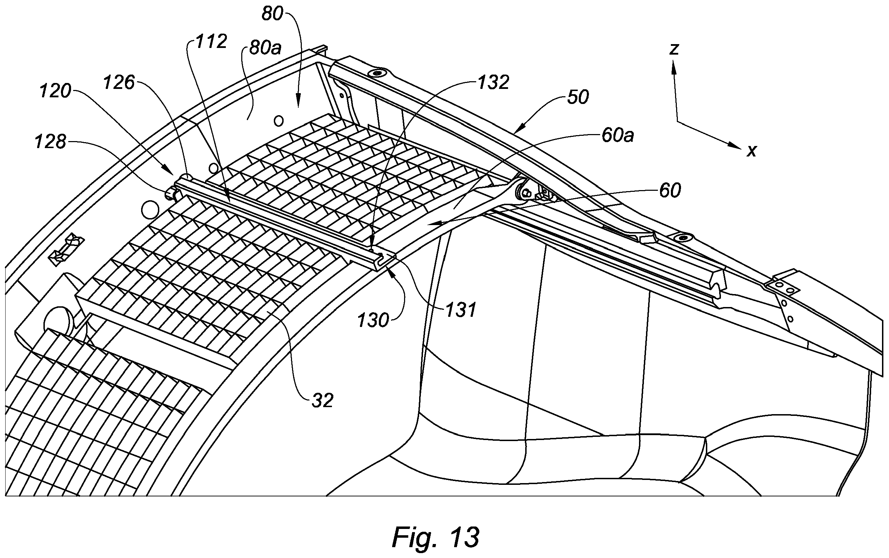

Sur les figures 7, 9, 10 et 12, l'extrémité aval de la glissière 112 comprend deux ailettes 131 d'accrochage de part et d'autre de la glissière 112 tandis que, dans une variante de réalisation illustrée sur les figures 13 à 15, une seule ailette 131 est prévue.

Il est à noter que ces liaisons peuvent être du type « fail-safe ».

Concernant plus particulièrement les moyens de guidage 110 dans le premier ou le second mode de réalisation, comme précédemment indiqué, leur forme n'est pas limitée à celles décrites en référence aux deux modes de réalisation de la présente invention et tout autre forme peut être envisagée.

Ainsi, la forme d'une gorge longitudinale s'étendant le long de l'axe X, cylindrique, partiellement ouverte de la glissière 112 illustré sur les figures 2 à 5 n'est pas limitative.

Il en est de même pour la forme d'un crochet destiné à coopérer avec un crochet complémentaire ménagé sur le rail 111 correspondant de l'ensemble de guidage 110 illustré sur les figures 7, 8, 13 à 15 notamment.

Comme il va de soi l'invention ne se limite pas aux seules formes de réalisation de cet inverseur de poussée, décrites ci-dessus à titre d'exemples, mais elle embrasse au contraire toutes les variantes couvertes par les revendications.

## Revendications

1. Dispositif (30) d'inversion de poussée pour nacelle de turboréacteur comprenant, au moins :
- une structure fixe de support pour inverseur de poussée, comprenant une demi-poutre (50) de support longitudinale agencée pour être montée pivotante sur un pylône de suspension et apte à supporter un demi-capot (31a) d'inversion de poussée,
- le demi-capot (31a) d'inversion de poussée monté coulissant sur la structure fixe selon une direction sensiblement parallèle à un axe longitudinal du dispositif, par un ensemble de guidage (110), entre une position de jet direct et une position d'inversion de poussée,
le dispositif (30) étant **caractérisé en ce que** la structure fixe comprend, en outre, des moyens adaptés pour décaler circonférentiellement (100,120,130), dans un plan radial à l'axe longitudinal, l'ensemble de guidage (110) du demi-capot (31a) entre ses différentes positions par rapport à la demi-poutre (50) sur laquelle est monté le demi-capot (31a).

2. Dispositif selon la revendication 1 dans lequel les moyens adaptés pour décaler circonférentiellement, dans un plan radial à l'axe longitudinal, l'ensemble de guidage (110) du demi-capot (31a) comprennent un cadre (100) support intermédiaire monté entre la demi-poutre (50) et le demi-capot (31a), configuré pour décaler angulairement relativement à la demi-poutre (50), dans un plan radial à l'axe longitudinal, l'ensemble de guidage (110) du demi-capot (31a).

3. Dispositif selon la revendication 2 dans lequel le cadre (100) support intermédiaire forme un cadre qui s'étend d'une part sur la longueur de la demi-poutre (50) correspondante et, d'autre part, sur un secteur angulaire d'un cadre avant de nacelle.

4. Dispositif selon la revendication 3 dans lequel le cadre (100) support intermédiaire est formé d'au moins :
- deux profilés latéraux (101,102) opposés s'étendant sur sa longueur, à savoir un premier et un second profilé latéral,
- deux profilés transversaux (103,104) opposés s'étendant sur sa largeur, à savoir un profilé transversal amont et un profilé transversal aval,
- des moyens de fixation ménagés sur le premier profilé latéral conçus pour la fixation du cadre (100) support intermédiaire sur la demi-poutre (50) et
- les moyens de guidage (100) du demi-capot ménagés sur le second profilé latéral (102).

5. Dispositif selon l'une des revendications 2 à 4 dans lequel le cadre support intermédiaire est conformé de sorte que les moyens de guidage sont ménagés autour dudit axe longitudinal à une distance angulaire de la demi-poutre supérieure ou égale à la distance angulaire entre l'extrémité libre longitudinale d'un panneau de carénage aérodynamique monté sur la demi-poutre et la demi-poutre.

6. Dispositif selon la revendication 4 dans lequel les moyens de fixation comprennent une bride (101a) de raccordement périphérique qui s'inscrit dans un plan perpendiculaire aux profilés transversaux (103,104) amont et aval.

7. Dispositif selon la revendication 4 ou l'une quelconque des revendications 5 et 6 en ce qu'elles dépendent de la revendication 4, dans lequel le second profilé latéral comprend au moins une glissière (112) de guidage longitudinale apte à coopérer avec un rail (111) de guidage monté sur ledit demi-capot ou inversement pour assurer le coulissement du demi-capot (31a) correspondant entre une position de jet direct et une position d'inversion de poussée ou inversement.

8. Dispositif selon la revendication 7 dans lequel le rail (111) de guidage est associé à une tige (114) de retenue supportant un patin (113) monté sur une demi-virole externe du demi-capot (31a) et le relie à la glissière correspondante, cette tige (114) pouvant être droite ou coudée.

9. Dispositif selon l'une des revendications 7 à 8 **caractérisé en ce qu'**il comprend, en outre, des moyens d'anti-coincement de rails dans les glissières correspondantes.

10. Dispositif selon l'une des revendications 4 à 9 dans lequel le cadre support intermédiaire comprend, en outre, des moyens de liaison amont ménagés sur le bord transversal amont conçus pour la liaison du cadre support intermédiaire sur le cadre avant de nacelle, ces moyens de liaison amont étant conçus pour une liaison par recouvrement du cadre support intermédiaire et du cadre avant, et comprennent un ou plusieurs orifices traversant adaptés pour recevoir des moyens de fixation destinés à solidariser le cadre support intermédiaire et le cadre avant.

11. Dispositif selon l'une des revendications 2 à 10 **caractérisé en ce qu'**il comprend, en outre, des moyens autorisant toute rotation d'un cadre arrière (60) relativement au cadre (100) de support intermédiaire sur lequel il est monté.

12. Dispositif selon la revendication 11 dans lequel le cadre (100) support intermédiaire comprend des moyens de liaison aval ménagés sur le bord transversal aval (104) conçus pour assurer une liaison de type rotule entre le cadre arrière (60) et le cadre (100) support intermédiaire.

13. Dispositif selon l'une des revendications 3 à 12 dans lequel le cadre (100) support intermédiaire comprend un ou plusieurs évidements (105) adaptés pour recevoir et servir de surface d'appui à une ou plusieurs grilles (32) de déviation de flux entre les différents profilés (101,102,103,104).

14. Dispositif selon la revendication 4 ou l'une quelconque des revendications 5 à 13 en ce qu'elles dépendent de la revendication 4, dans lequel le cadre (100) support intermédiaire comprend, en outre, une ou plusieurs nervures (107) de renforts de reprise d'effort transversaux formées sur un ou plusieurs des profilés transversaux (103,104).

15. Dispositif selon la revendication 1 dans lequel les moyens adaptés pour décaler circonférentiellement, dans un plan radial à l'axe longitudinal, l'ensemble de guidage (110) du demi-capot (31a) comprennent :
- des moyens de liaison aval complémentaires ménagés sur l'ensemble de guidage et le cadre arrière conçus pour assurer une liaison entre le cadre arrière et l'ensemble de guidage du capot décalée circonférentiellement, dans un plan radial à l'axe longitudinal, par rapport à la demi-poutre (50) sur laquelle est monté le demi-capot (31a).
- des moyens de liaison amont complémentaires ménagés sur l'ensemble de guidage et le cadre avant conçus pour assurer une liaison entre l'ensemble de guidage et le cadre avant décalée circonférentiellement, dans un plan radial à l'axe longitudinal, par rapport à la demi-poutre (50) sur laquelle est monté le demi-capot (31a).

16. Dispositif selon la revendication 15 dans lequel les moyens de liaison amont (120) comprennent des moyens autorisant toute rotation de l'ensemble de guidage (110) relativement au cadre avant (80) sur lequel il est monté.

17. Dispositif selon la revendication 16 dans lequel les moyens de liaison amont (120) sont conçus pour assurer une liaison de type rotule entre le cadre avant (80) et l'extrémité amont de l'ensemble de guidage (110).

18. Dispositif selon la revendication 15 dans lequel les moyens de liaison amont (120) comprennent des moyens interdisant toute rotation selon l'axe longitudinal de l'ensemble de guidage (110) relativement au cadre avant (80) sur lequel il est monté.

19. Dispositif selon la revendication 18 dans lequel les moyens de liaison amont (120) comprennent une première liaison rotulée entre l'ensemble de guidage (110) et le cadre avant (80) associé à un élement (128) interdisant la rotation selon l'axe longitudinal de l'ensemble de guidage (110).

20. Dispositif selon la revendication 19 dans lequel ledit élement interdisant la rotation comprend un doigt de blocage (128) s'étendant selon l'axe longitudinal et adapté pour coopérer avec un orifice traversant ménagé sur le cadre avant (80).

21. Nacelle (2) de turboréacteur comprenant dans sa section aval un dispositif d'inversion de poussée (30) conforme à l'une des revendications 1 à 20.

## Patentansprüche

1. Vorrichtung (30) zur Schubumkehr für eine Turbotriebwerksgondel, mindestens umfassend:
- eine feststehende Trägerstruktur für eine Schubumkehr, umfassend einen Längsträger-Halbtragbalken (50), der angeordnet ist, um schwenkbar an einer Aufhängungspylone montiert zu werden, und imstande, eine Halbabdeckung (31a) einer Schubumkehr zu tragen,
- die Halbabdeckung (31a) einer Schubumkehr, die auf der feststehenden Struktur in eine im Wesentlichen parallele Richtung zu einer Längsachse der Vorrichtung durch eine Führungseinheit (110) zwischen einer Direktstrahlposition und einer Schubumkehrposition gleitend montiert ist,
wobei die Vorrichtung (30) **dadurch gekennzeichnet ist, dass** die feststehende Struktur weiter Mittel umfasst, die angepasst sind, um die Führungseinheit (110) der Halbabdeckung (31a) in einer zur Längsachse radialen Ebene zwischen ihren verschiedenen Positionen im Verhältnis zu dem Halbtragbalken (50), auf dem die Halbabdeckung (31a) montiert ist, umfänglich (100, 120, 130) zu verschieben.

2. Vorrichtung nach Anspruch 1, wobei die Mittel, die angepasst sind, um die Führungseinheit (110) der Halbabdeckung (31a) in einer zur Längsachse radialen Ebene umfänglich zu verschieben, einen Zwischenträgerrahmen (100) umfassen, der zwischen dem Halbtragbalken (50) und der Halbabdeckung (31a) montiert ist, konfiguriert, um die Führungseinheit (110) der Halbabdeckung (31a) relativ zu dem Halbtragbalken (50) in einer zur Längsachse radialen Ebene winkelig zu verschieben.

3. Vorrichtung nach Anspruch 2, wobei der Zwischenträgerrahmen (100) einen Rahmen bildet, der sich einerseits über die Länge des entsprechenden Halbtragbalkens (50) erstreckt, und andererseits über einen Winkelsektor eines Gondelvorderrahmens.

4. Vorrichtung nach Anspruch 3, wobei der Zwischenträgerrahmen (100) mindestens gebildet wird aus:
- zwei gegenüberliegenden Seitenprofilen (101, 102), die sich über seine Länge erstrecken, nämlich ein erstes und ein zweites Seitenprofil,
- zwei gegenüberliegenden Querprofilen (103, 104), die sich über seine Länge erstrecken, nämlich ein stromaufwärtiges Querprofil und ein stromabwärtiges Querprofil,
- Befestigungsmittel, die auf dem ersten Seitenprofil ausgeführt sind, zur Befestigung des Zwischenträgerrahmens (100) auf dem Halbtragbalken (50) gestaltet, und
- den Führungsmitteln (100) der Halbabdeckung, die auf dem zweiten Seitenprofil (102) ausgeführt sind.

5. Vorrichtung nach einem der Ansprüche 2 bis 4, wobei der Zwischenträgerrahmen derart geformt ist, dass die Führungsmittel um die Längsachse in einem Winkelabstand von dem Halbtragbalken größer oder gleich dem Winkelabstand zwischen dem freien Längsende einer auf dem Halbtragbalken montierten aerodynamischen Verkleidungsplatte und dem Halbtragbalken ausgeführt sind.

6. Vorrichtung nach Anspruch 4, wobei die Befestigungsmittel einen peripheren Anschlussflansch (101a) umfassen, der in eine Ebene senkrecht zu dem stromaufwärtigen und stromabwärtigen Querprofil (103, 104) eingetragen ist.

7. Vorrichtung nach Anspruch 4 oder einem der Ansprüche 5 und 6, dadurch, dass sie von Anspruch 4 abhängig sind, wobei das zweite Seitenprofil mindestens eine Gleitschiene (112) zur Längsführung umfasst, die imstande ist, mit einer Führungsschiene (111) zusammenzuwirken, die auf der Halbabdeckung montiert ist, oder umgekehrt, um für das Gleiten der entsprechenden Halbabdeckung (31a) zwischen einer Direktstrahlposition und einer Schubumkehrposition oder umgekehrt zu sorgen.

8. Vorrichtung nach Anspruch 7, wobei die Führungsschiene (111) einer Rückhaltestange (114) zugeordnet ist, die einen Schlitten (113) trägt, der auf einem externen Halbring der Halbabdeckung (31a) montiert ist und ihn mit der entsprechenden Gleitschiene verbindet, wobei diese Stange (114) gerade oder gebogen sein kann.

9. Vorrichtung nach einem der Ansprüche 7 bis 8, **dadurch gekennzeichnet, dass** sie weiter Mittel zum Schieneneinklemmschutz in den entsprechenden Gleitschienen umfasst.

10. Vorrichtung nach einem der Ansprüche 4 bis 9, wobei der Zwischenträgerrahmen weiter Mittel zur stromaufwärtigen Verbindung umfasst, die am stromaufwärtigen Querrand ausgeführt sind, für die Verbindung des Zwischenträgerrahmens an dem Gondelvorderrahmen gestaltet, wobei diese Mittel zur stromaufwärtigen Verbindung für eine Verbindung durch Überlappen des Zwischenträgerrahmens und des Vorderrahmens gestaltet sind, und eine oder mehrere durchgehende Öffnungen umfassen, die angepasst sind, um Befestigungsmittel aufzunehmen, die dazu bestimmt sind, den Zwischenträgerrahmen und den Vorderrahmen fest zu verbinden.

11. Vorrichtung nach einem der Ansprüche 2 bis 10, **dadurch gekennzeichnet, dass** sie weiter Mittel umfasst, die jede Drehung eines Hinterrahmens (60) relativ zu dem Zwischenträgerrahmen (100), auf dem er montiert ist, erlauben.

12. Vorrichtung nach Anspruch 11, wobei der Zwischenträgerrahmen (100) Mittel zur stromabwärtigen Verbindung umfasst, die am stromabwärtigen Querrand (104) ausgeführt sind, gestaltet, um für eine Verbindung in der Art eines Kugelkopfes zwischen dem Hinterrahmen (60) und dem Zwischenträgerrahmen (100) zu sorgen.

13. Vorrichtung nach einem der Ansprüche 3 bis 12, wobei der Zwischenträgerrahmen (100) eine oder mehrere Ausnehmungen (105) umfasst, die angepasst sind, ein oder mehrere Strömungsumlenkgitter (32) zwischen den verschiedenen Profilen (101, 102, 103, 104) aufzunehmen und als deren Auflagefläche zu dienen.

14. Vorrichtung nach Anspruch 4, oder einem der Ansprüche 5 bis 13, dadurch, dass sie von Anspruch 4 abhängig sind, wobei der Zwischenträgerrahmen (100) weiter eine oder mehrere Verstärkungsrippen (107) zur Aufnahme von Querkräften umfasst, die an einem oder mehreren der Querprofile (103, 104) gebildet werden.

15. Vorrichtung nach Anspruch 1, wobei die Mittel, die angepasst sind, um die Führungseinheit (110) der Halbabdeckung (31a) in einer zur Längsachse radialen Ebene umfänglich zu verschieben, umfassen:
- ergänzende Mittel zur stromabwärtigen Verbindung, die auf der Führungseinheit und dem Hinterrahmen ausgeführt sind, gestaltet, um für eine umfänglich verschobene Verbindung zwischen dem Hinterrahmen und der Führungseinheit der Abdeckung, auf einer Ebene radial zur Längsachse im Verhältnis zu dem Halbtragbalken (50), auf dem die Halbabdeckung (31a) montiert ist, zu sorgen,
- ergänzende Mittel zur stromaufwärtigen Verbindung, die auf der Führungseinheit und dem Vorderrahmen ausgeführt sind, gestaltet, um für eine umfänglich verschobene Verbindung zwischen der Führungseinheit und dem Vorderrahmen der Abdeckung, auf einer Ebene radial zur Längsachse im Verhältnis zu dem Halbtragbalken (50), auf dem die Halbabdeckung (31a) montiert ist, zu sorgen.

16. Vorrichtung nach Anspruch 15, wobei die Mittel zur stromaufwärtigen Verbindung (120) Mittel umfassen, die jede Drehung einer Führungseinheit (110) relativ zu dem Vorderrahmen (80), auf dem sie montiert ist, erlauben.

17. Vorrichtung nach Anspruch 16, wobei die Mittel zur stromaufwärtigen Verbindung (120) gestaltet sind, um für eine Verbindung in der Art eines Kugelkopfes zwischen dem Vorderrahmen (80) und dem stromaufwärtigen Ende der Führungseinheit (110) zu sorgen.

18. Vorrichtung nach Anspruch 15, wobei die Mittel zur stromaufwärtigen Verbindung (120) Mittel umfassen, die jede Drehung entlang der Längsachse der Führungseinheit (110) relativ zu dem Vorderrahmen (80), auf dem sie montiert ist, untersagen.

19. Vorrichtung nach Anspruch 18, wobei die Mittel zur stromaufwärtigen Verbindung (120) eine erste Kugelkopfverbindung zwischen der Führungseinheit (110) und dem Vorderrahmen (80) umfassen, der einem Element (128) zugeordnet ist, welches die Drehung der Führungseinheit (110) entlang der Längsachse untersagt.

20. Vorrichtung nach Anspruch 19, wobei das Element, welches die Drehung untersagt, einen Sperrfinger (128) umfasst, der sich entlang der Längsachse erstreckt, und angepasst ist, um mit der durchgehenden Öffnung zusammenzuwirken, die an dem Vorderrahmen (80) ausgeführt ist.

21. Turbotriebwerksgondel (2), in ihrer stromabwärtigen Sektion eine Vorrichtung zur Schubumkehr (30) nach einem der Ansprüche 1 bis 20 umfassend.

## Claims

1. A thrust reverser device (30) for a turbojet engine nacelle comprising at least:
- a fixed support structure for a thrust reverser, comprising a longitudinal support half-beam (50) arranged to be pivotally mounted on a suspension pylon and capable of supporting a thrust reverser half-cowl (31a),
- the thrust reverser half-cowl (31a) slidably mounted on the fixed structure along a direction substantially parallel to a longitudinal axis of the device, by a guide assembly (110), between a direct jet position and a thrust reversal position,
the device (30) being **characterized in that** the fixed structure further comprises means adapted to circumferentially offset (100, 120, 130), in a plane radial to the longitudinal axis, the guide assembly (110) of the half-cowl (31a) between its different positions relative to the half-beam (50) on which the half-cowl (31a) is mounted.

2. The device according to claim 1 wherein the means adapted to circumferentially offset, in a plane radial to the longitudinal axis, the guide assembly (110) of the half-cowl (31a) comprise an intermediate support frame (100) mounted between the half-beam (50) and the half-cowl (31a), configured to angularly offset relative to the half-beam (50), in a plane radial to the longitudinal axis, the guide assembly (110) of the half-cowl (31a).

3. The device according to claim 2 wherein the intermediate support frame (100) forms a frame which extends, on the one hand, over the length of the corresponding half-beam (50) and, on the other hand, over an angular sector of a nacelle front frame.

4. The device according to claim 3 wherein the intermediate support frame (100) is formed of at least:
- two opposite lateral profiles (101, 102) extending over its length, namely a first and a second lateral profile,
- two opposite transverse profiles (103,104) extending over its width, namely an upstream transverse profile and a downstream transverse profile,
- fixing means formed on the first lateral profile designed for fixing the intermediate support frame (100) on the half-beam (50) and
- the guide means (100) of the half-cowl formed on the second lateral profile (102).

5. The device according to any of claims 2 to 4 wherein the intermediate support frame is shaped so that the guide means are formed about said longitudinal axis at an angular distance from the half-beam greater than or equal to the angular distance between the free longitudinal end of an aerodynamic fairing panel mounted on the half-beam and the half-beam.

6. The device according to claim 4 wherein the fixing means comprise a peripheral connection flange (101a) which is part of a plane perpendicular to the upstream and downstream transverse profiles (103,104).

7. The device according to claim 4 or any one of claims 5 and 6 in that they depend on claim 4, wherein the second lateral profile comprises at least one longitudinal guide slide (112) able to cooperate with a guide rail (111) mounted on said half-cowl or vice versa in order to ensure sliding of the corresponding half-cowl (31a) between a direct jet position and a thrust reversal position or vice versa.

8. The device according to claim 7 wherein the guide rail (111) is associated with a holding rod (114) supporting a pad (113) mounted on an outer half-shroud of the half-cowl (31a) and links it to the corresponding slide, this rod (114) being straight or bent.

9. The device according to any of claims 7 to 8 **characterized in that** it further comprises means for anti-jamming of rails in the corresponding slides.

10. The device according to any of claims 4 to 9 wherein the intermediate support frame further comprises upstream connection means formed on the upstream transverse edge designed for connecting the intermediate support frame on the nacelle front frame, these upstream connection means being designed for a connection by overlapping the intermediate support frame and the front frame, and comprise one or more through orifices adapted to receive fixing means intended to secure the intermediate support frame and the front frame.

11. The device according to any of claims 2 to 10 **characterized in that** it further comprises means allowing any rotation of a rear frame (60) relatively to the intermediate support frame (100) on which it is mounted.

12. The device according to claim 11 wherein the intermediate support frame (100) comprises downstream connection means formed on the downstream transverse edge (104) designed to ensure a ball-joint type connection between the rear frame (60) and the intermediate support frame (100).

13. The device according to any of claims 3 to 12 wherein the intermediate support frame (100) comprises one or more recesses (105) adapted to receive and to serve as a bearing surface to one or more flow cascade vanes (32) between different profiles (101,102,103,104).

14. The device according to claim 4 or any one of claims 5 to 13 in that they depend on claim 4, wherein the intermediate support frame (100) further comprises one or more force take-up transverse reinforcement ribs (107) formed on one or more of the transverse profiles (103, 104).

15. The device according to claim 1 wherein the means adapted to circumferentially offset, in a plane radial to the longitudinal axis, the guide assembly (110) of the half-cowl (31a), comprise:
- complementary downstream connection means formed on the guide assembly and the rear frame designed to ensure a circumferentially offset connection between the rear frame and the guide assembly of the cowl, in a plane radial to the longitudinal axis, relative to the half-beam (50) on which the half-cowl (31a) is mounted.
- complementary upstream connection means formed on the guide assembly and the front frame designed to ensure a circumferentially offset connection between the guide assembly and the front frame, in a plane radial to the longitudinal axis, relative to the half-beam (50) on which the half-cowl (31a) is mounted.

16. The device according to claim 15 wherein the upstream connection means (120) comprise means allowing any rotation of the guide assembly (110) relatively to the front frame (80) on which it is mounted.

17. The device according to claim 16 wherein the upstream connection means (120) are designed to ensure a ball-joint type connection between the front frame (80) and the upstream end of the guide assembly (110).

18. The device according to claim 15 wherein the upstream connection means (120) comprise means prohibiting any rotation about the longitudinal axis of the guide assembly (110) relatively to the front frame (80) on which it is mounted.

19. The device according to claim 18 wherein the upstream connection means (120) comprise a first ball-jointed connection between the guide assembly (110) and the front frame (80) associated with an element (128) prohibiting rotation about the longitudinal axis of the guide assembly (110).

20. The device according to claim 19 wherein said element prohibiting rotation comprises a blocking finger (128) extending along the longitudinal axis and adapted to cooperate with a through orifice formed on the front frame (80).

21. A turbojet engine nacelle (2) comprising in its downstream section a thrust reverser device (30) in accordance with any of claims 1 to 20.
